# EUROPEAN PATENT SPECIFICATION

(11) **EP 3 474 528 B1**
(45) Date of publication and mention of the grant of the patent: **14.04.2021**
(21) Application number: 18209546.3
(22) Date of filing: 27.06.2008
(51) Int. Cl.: H04L 12/14, H04M 15/10, H04M 15/00, H04W 88/18

(54) **METHOD, APPARATUS, AND COMPUTER PROGRAM PRODUCT FOR PROVIDING ADVICE OF CHARGE SERVICE**
VERFAHREN, VORRICHTUNG UND COMPUTERPROGRAMMPRODUKT ZUR BEREITSTELLUNG EINES GEBÜHRENINFORMATIONSDIENSTES
PROCÉDÉ, APPAREIL ET PRODUIT-PROGRAMME D'ORDINATEUR POUR FOURNIR UN SERVICE D'INDICATION DE PRIX

(43) Date of publication of application: 24.04.2019
(62) Divisional of application: 08774469.4
(73) Proprietor: Nokia Solutions and Networks Oy, 02610 Espoo (FI)
(72) Inventor: FARTHOFER, Martin, 1220 Wien (AT); GÖRMER, Gerald, 16352 Basdorf (DE); HICKETHIER, Thomas, 13086 Berlin (DE)
(74) Representative: Roberts, David

(56) References cited:
- US-A1- 2008 123 603
- NOKIA SIEMENS NETWORKS: "Message flows for AoC in IMS", 3GPP DRAFT; S5-080682 MESSAGE FLOWS FOR AOC IN IMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Chengdu, China; 20080411, 11 April 2008 (2008-04-11), XP050307282, [retrieved on 2008-04-11]
- 3GPP: "3rd Generation Partnership Project;Technical Specification Group Services and System Aspects;Telecommunication management;Charging management; Advice of Charge (AoC) service(Release 8)", 3GPP DRAFT; 32280-031_RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20080618, 18 June 2008 (2008-06-18), XP050307616, [retrieved on 2008-06-18]
- NORTEL NETWORKS (DJSIDORNUORTELNETWORKS COM): "Detailed Proposal for Diameter Credit Control for Flow Based Charging and GPRS in TS 32.299 v2", 3GPP DRAFT; S5-044448 32299 DETAILED DCC USE IN 3GPP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20040702, 2 July 2004 (2004-07-02), XP050299204, [retrieved on 2004-07-02]
- NOKIA SIEMENS NETWORKS: "3GPP TSG-SA5 (Telecom Management), S5-080682 Meeting SA5#59, 21 - 25 April 2008, Chengdu, CHINA", 3GPP , 11 April 2008 (2008-04-11), XP002524645, INTERENT PUBLICATION Retrieved from the Internet: URL:http://isearch.etsi.org/3GPPSearch/isy squery/cc72dff0-3901-48f2-8f74-13af24d37bb 7/4/details/ [retrieved on 2009-04-21]
- ALCATEL-LUCENT (VERONIQUE BELFORT@ALCATEL-LUCENT FR): "Add refund charging mechanism", 3GPP DRAFT; 32299_CR0201_(REL-8)_S5-071664, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Riga, Latvia; 20070908, 8 September 2007 (2007-09-08), XP050209647, [retrieved on 2007-09-08]

## Description

### FIELD OF THE INVENTION

The present invention relates call charge indication. More specifically, the present invention relates to methods, apparatuses, a system, a related computer program product and a data structure for call charge indication. Examples of the present invention may be applicable e.g. to the (3^{rd} generation partnership project (3GPP) release 8 of) the Advice of Charge (AoC) service e.g. for the internet protocol (IP) multimedia subsystem (IMS).

### BACKGROUND

3GPP specifies the AoC service which can provide the tariff-, rate- and/or cost information e.g. of the requested IMS/public switched telephone network (PSTN) service. That AoC service may be a pure phone call or with media components between a user in the PSTN (while the information may e.g. be expected rate before establishing the call, the cumulated costs of the call during the call, and/or the final costs at the end of the call) and an IMS user, and further may allow the IMS user to cancel the corresponding service or a media component when the costs e.g. of the call or for the invited media component to the PSTN exceed a specific limit.

Currently, there is neither a so-called diameter message nor any other message defined to exchange tariff, cost or rate information e.g. between the online charging system (OCS) and e.g. a network node or user equipment (UE) for AoC purposes. Currently, 3GPP technical specification (TS) 32.280 does not describe which message has to be used e.g. to request information for AoC. NOKIA SIEMENS NETWORKS: "Message Flows for AoC in IMS", 3GPP draft, S5-080682 MESSAGE FLOWS FOR AOC IN IMS, 3RD GNERATION PARTNERSHIP PROJECT (3GPP), MOBILE COMPETENCE CENTRE; 650, ROUTE DES LUCIOLES; F-06921 SOPHIA ANTIPOLIS CEDEX; FRANCE; SA WG5, Chengdu, China; 20080411, 11 April 2009 describes message flows for an AoC in an IMS.

3GPP: "3rd Generation Partnership Project; Technical Specification Group Services and System Aspects; Telecommunication management; Charging management; Advice of Charge (AoC) service (Release 8)", 3GPP DRAFT; 32280-031_RM, MOBILE COMPETENCE CENTRE; 650, ROUTE DES LUCIOLES; F-06921 SOPHIA ANTIPOLIS CEDEX; FRANCE; SA WG5, 18 June 2008 describes an AoC service.

NORTEL NETWORKS (DJSIDORNUORTELNETWORKS COM) "Detailed proposal for Diameter Credit Control for Flow Based Charging and GPRS in TS 32.299 v2)", 3GPP DRAFT; S5-044448 32299 DETAILED DCC USE IN 3GPP, 3RD GENERATION PARTNERSHIP PROJECT (3GPP), MOBILE COMPETENCE CENTRE; 650, ROUTE DES LUCIOLES; F-06921 SOPHIA ANTIPOLIS CEDEX; FRANCE; SA WG5,2 July 2004 describes diameter credit control for flow based charging.

ALCATEL-LUCENT (VERONIQUE BELFORT@ALCATEL-LUCENT FR): "Add refund charging mechanism", 3GPP DRAFT, 32.299_CR0201_ (REL-8)_S5-071664 , 3RD GENERATION PARTNERSHIP PROJECT (3GPP), MOBILE COMPETENCE CENTRE; 650, ROUTE DES LUCIOLES, F-06921 SOPHIA-ANTIPOLIS CEDEX; FRANCE, TSG SA, Riga, Latvia, 8 September 2007, XP050209647 describes a refund charging mechanism.

In consideration of the above, it is an object of examples of the present invention to overcome one or more of the above drawbacks. In particular, the present invention provides methods, apparatuses, a system, a related computer program product and a data structure for call charge indication.

According to a first aspect of the invention there is provided a method performed by an advice of charge function of providing advice of charge service in an internet protocol multimedia subsystem, IMS, comprising: receiving a request for setting up a session for a user, receiving an advice of charge type from a home subscriber server, HSS, determining that the advice of charge type comprises an indication indicating that advice of charge information is to be provided to the user during setting up the session, AoC-S, querying an Online Charging System, OCS, for tariff information, wherein the querying for tariff information comprises sending a credit control event request message with a requested-action attribute-value pair set to PRICE_ENQUIRY, receiving the tariff information from the Online Charging System, OCS, in a credit control answer message, and including advice of charge information in a response to the request.

The method may further comprise mapping the tariff information into the advice of charge information.

The method may further comprise detecting a tariff change, and querying the Online Charging System, OCS, for tariff information.

The method may further comprise querying the home subscriber server, HSS, for the advice of charge type.

According to a second aspect, there is provided an apparatus for providing advice of charge service in an internet protocol multimedia subsystem, IMS, comprising: means for receiving a request for setting up a session for a user, means for receiving an advice of charge type from a home subscriber server, HSS, means for determining that the advice of charge type comprises an indication indicating that advice of charge information is to be provided to the user during setting up the session, AoC-S, means for querying an Online Charging System, OCS, for tariff information, wherein the querying for tariff information comprises sending a credit control event request message with a requested-action attribute-value pair set to PRICE_ENQUIRY, means for receiving the tariff information from the Online Charging System, OCS, in a credit control answer message, and means including advice of charge information in a response to the request.

The apparatus may further comprise means for mapping the tariff information into the advice of charge information.

The apparatus may further comprise means for detecting a tariff change, and querying the Online Charging System, OCS, for tariff information.

The apparatus may further comprise means for querying a home subscriber server, HSS, for the advice of charge type.

According to a third aspect there is provided a computer program product comprising code instructions which, when executed by a processor of an advice of charge function, cause the processor to carry out the steps of the method of any of claims 1 to 4 of the appended claims.

In this connection, it has to be pointed out that some examples of the present invention enable one or more of the following:
- Allowing e.g. an AoC function (ACF) to request information e.g. from the OCS for providing the AoC information to the IMS user;
- Allowing, e.g. by a credit control event request (CCRe), to request cost-, rate- and/or tariff-information e.g. from the OCS independent from possibly performed credit control for a session initiation protocol (SIP) session or a SIP event;
- Enabling to provide the user with the AoC information during the session establishment (e.g. expected rate, tariff switch information, AoC - setup (AoC-S)), during an ongoing SIP session (e.g. cumulated costs, AoC - during (AoC-D)) and at the end of the SIP session (e.g. final/total costs, e.g. AoC - end (AoC-E));
- Enabling usage of a diameter message to request the cost-, tariff- and rate information for AoC;
- Allowing separation of the AoC request from other applications like diameter credit control by using a diameter application ID according to an example of the present invention.

### BRIEF DESCRIPTION OF THE DRAWINGS

Examples of the present invention are described herein below with reference to the accompanying drawings, in which:
Fig. 1A shows methods according to an example of the present invention for call charge indication e.g. for an AoC-S service, and Fig. 1B shows methods according to an alternative example of present invention for call charge indication e.g. for an AoC-S service;
Fig. 2A shows methods according to an example of the present invention for call charge indication e.g. for an AoC-D service, and Fig. 2B shown methods according to an alternative example of present invention for call charge indication e.g. for an AoC-D service;
Fig. 3A shows methods according to an example of the present invention for call charge indication e.g. for an AoC-E service, and Fig. 3B shown methods according to an alternative example of present invention for call charge indication e.g. for an AoC-E service;
Fig. 4A shows other methods according to an example of the present invention for call charge indication e.g. for an AoC-E service, and Fig. 4B shown methods according to an alternative example of present invention for call charge indication e.g. for an AoC-D service;
Fig. 5 shows apparatuses (e.g. OCS 2021 and ACF 2023) for call charge indication according to an example of the present invention; and
Fig. 6 shows a data structure (e.g. CCRe) for call charge indication according to an example of the present invention.

### DETAILED DESCRIPTION OF THE PRESENT INVENTION

Examples of the present invention are described herein below by way of example with reference to the accompanying drawings.

It is to be noted that for this description, the terms "credit control event request; auth-application-ID; content of communication (CC)-request-type; EVENT_REQUEST; requested-action AVP; PRICE_ENQUIRY; Service-Information address value pair (AVP); IMS service; SIP OK, SP, INFO, or BYE; CCAe; and Tariff Info" are examples for "request message; first information; second information; absence of a need for credit control; third information; need for call charge indication; fourth information; a service requested; response message; answer message; and call charge information", respectively, without restricting the latter-named terms to the special technical or implementation details imposed to the first-named terms.

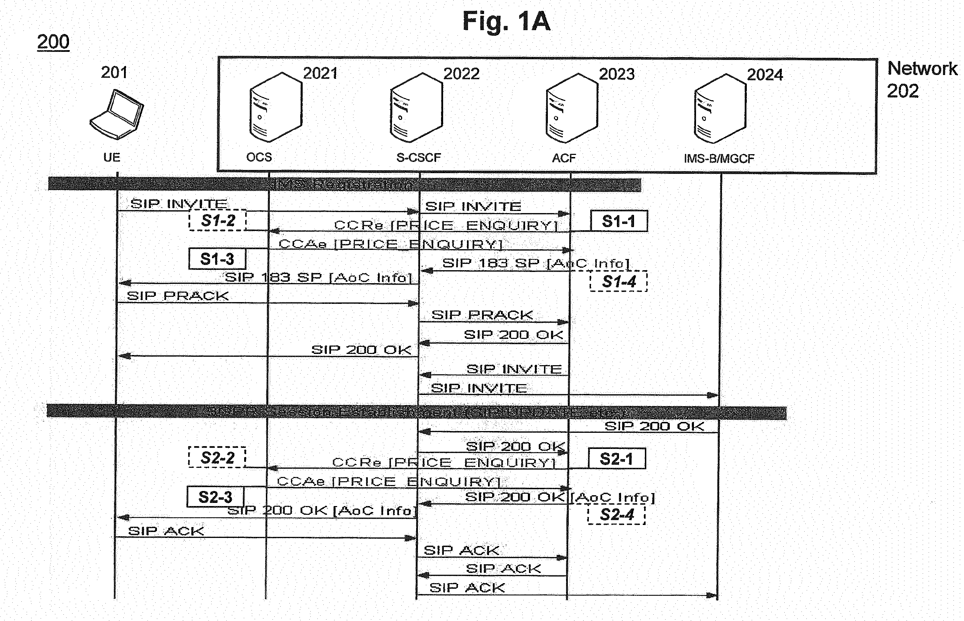

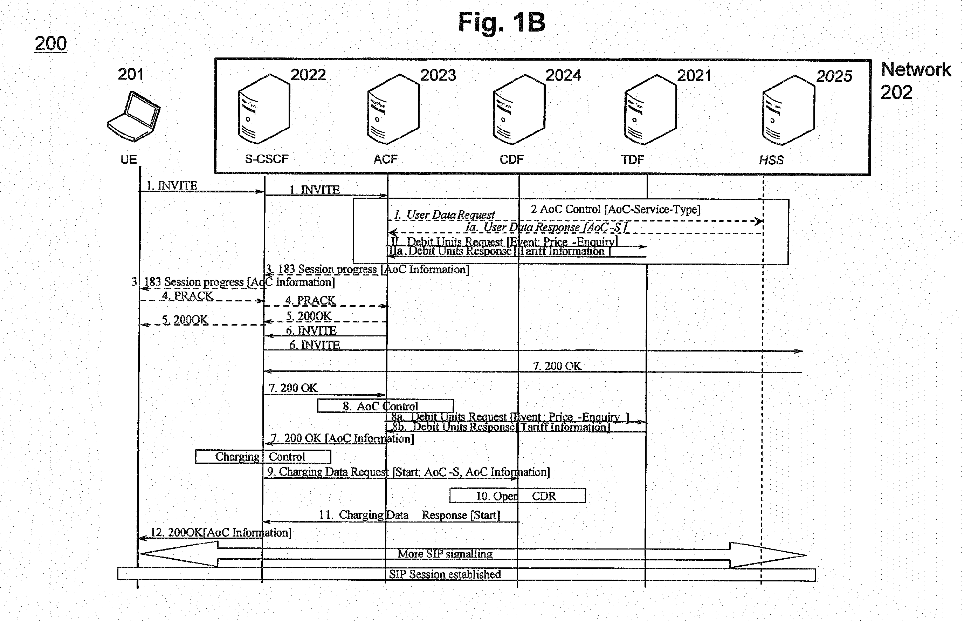

Figs. 1A, 2A, 3A and 4A show methods for call charge indication according to an example of the present invention e.g. for an AoC-S, AoC-D and AoC-E service, while Figs. 1B, 2B, 3B and 4B show methods for call charge indication according to alternative example of the present invention e.g. for an AoC-S, AoC-D and AoC-E service. Signaling between elements is indicated in horizontal direction, while time aspects between signaling may be reflected in the vertical arrangement of the signaling sequence as well as in the sequence numbers. It is to be noted that the time aspects indicated in Figs. 1 to 4 do not necessarily restrict any one of the method steps shown to the step sequence outlined. This applies in particular to method steps that are functionally disjunctive with each other. Within Figs. 1 to 4, for ease of description, means or portions which may provide main functionalities are depicted with solid functional blocks or arrows and/or a normal font, while means or portions which may provide optional functions are depicted with dashed functional blocks or arrows and/or an italic font.

As shown in Figs. 1A, 2A, 3A and 4A, a communication system 200 may comprise a UE 201 and a network 202. The network 202 in turn may comprise an OCS 2021, a serving call state control function (S-CSCF) 2022, an ACF 2023 and an IMS node B/media gateway control function (IMS-B/MGCF) 2024.

In the respective steps S1-1 to S5-1, e.g. the ACF 2023 may perform transmitting a request message for call charge information (e.g. CCRe) comprising first information (e.g. Auth-Application-ID = 5) being different from credit control information (e.g. Auth-Application-ID ≠ 4), second information (e.g. CC-Request-Type) indicating absence of a need for credit control (e.g. EVENT_REQUEST), third information (e.g. Requested-Action AVP) indicating a need for call charge indication (e.g. PRICE_ENQUIRY), and fourth information (e.g. Service-Information AVP) concerning a service requested (e.g. IMS service). In respective optional steps Sl-2 to S5-2, e.g. the OCS 2021 may perform receiving the request message.

Then, in respective steps Sl-3 to S5-3, e.g. the OCS 2021 may perform transmitting an answer message (e.g. CCAe) comprising call charge information (e.g. Tariff Info) responsive to reception of the request message comprising the above-described first to fourth information.

In respective optional steps S1-4 to S5-4, e.g. the OCS 2021 may perform relaying, responsive to reception of the answer message comprising the call charge information, the call charge information in a response message.

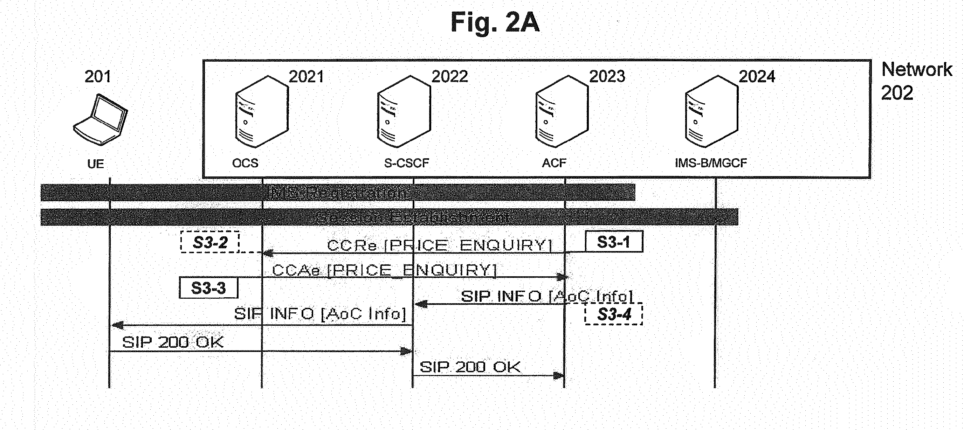

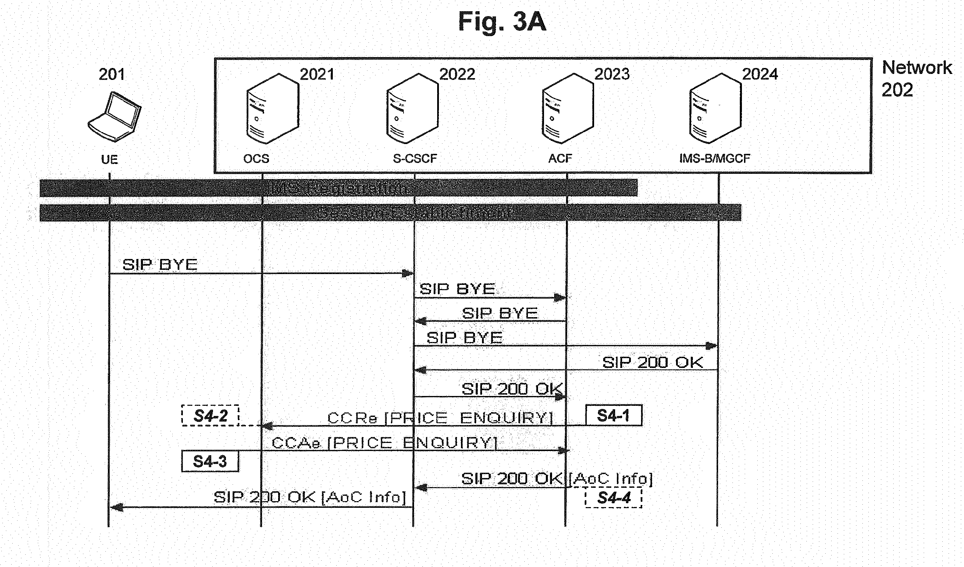

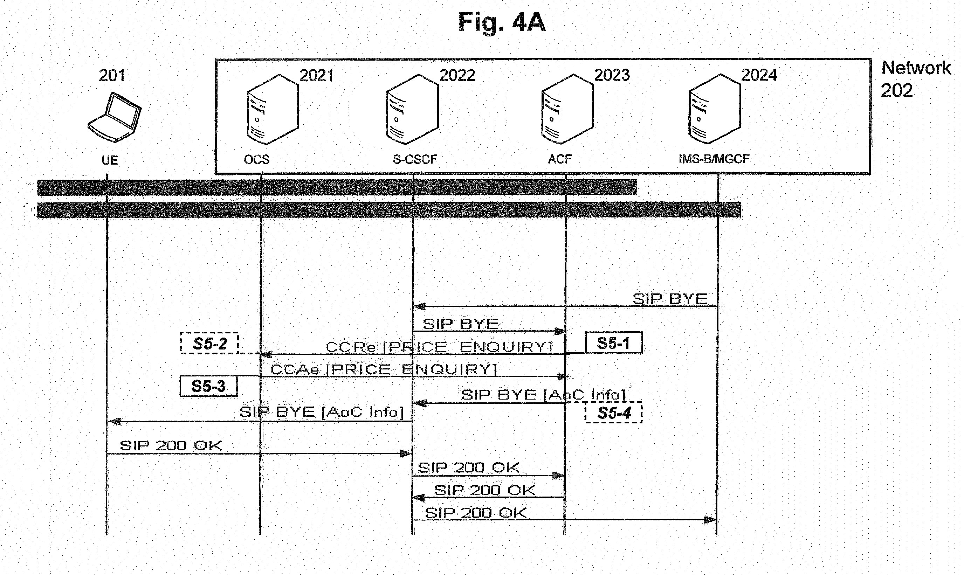

As for further refinements of the methods according to an example of the present invention, the response message may be a session initiation protocol session progress response (see Fig. 1A, step S1-4, Aoc-S after IMS registration but prior to session establishment), a session initiation protocol OK response (see Fig. 1A, step S2-4, AoC-S after session establishment), a session initiation protocol information message (see Fig. 2A, step S3-4, AoC-D after session establishment), a session initiation protocol OK response answering another session initiation protocol bye message (see Fig. 3A, step S4-4 AoC-E e.g. shortly before call termination (not shown)) and a session initiation protocol bye message (see Fig. 4A, step S5-4, Aoc-E e.g. shortly before call termination (not shown)).

Figs. 1B, 2B, 3B and 4B show methods for call charge indication according to alternative example of the present invention e.g. for an AoC-S, AoC-D and AoC-E service.

As shown in Figs. 1B, 2B, 3B and 4B, the communication system 200 may comprise the UE 201 and the network 202. The network 202 in turn may comprise a tariff determination function (TDF) 2021, a tariff determination point (TDP, not shown in the Figs.), the S-CSCF 2022, the ACF 2023 and a charging data function (CDF) 2024. In Fig. 1B, the network 202 may also comprise an optional home subscriber server (HSS) 2025.

As shown in Fig. 1A, the following sequence may be performed:
1. An initial SIP Invite Request is received in the S-CSCF 2022. This request is forwarded to the AoC Function 2023.
2. The AoC Function 2023 receives the AoC Type = [AoC-S] and queries (in substeps II and IIa) the TDF 2021 for Tariff Information. Optionally (in substeps I and Ia), the ACF 2023 may query the HSS 2025 e.g. for the AoC Type = [AoC-S].
3. The AoC-S information is included in SIP 183 response.
4. The UE 201 acknowledges the SIP 183 e.g. with PRACK.
5. The AoC Function 2023 responses with SIP 2000K.
6. The SIP Invite Request is received in the S-CSCF 2022 which forwards this request.
7. The S-CSCF 2022 receives the SIP 200 OK response and forwards this response.
8. The AoC Function 2023 queries the TDF 2021 and maps the Tariff Information into the AoC Information for further proceeding.
9. The S-CSCF 2022 sends a Charging Data Request with AoC service type and AoC Information indicating START_RECORD to the CDF 2024.
10. The CDF 2024 opens a charging data record (CDR) of the S-CSCF 2022 CDR to record the AoC service type and AoC Information.
11. The CDF 2024 acknowledges the reception of the Charging Data Response.
12. The AoC-S information is inserted in the SIP 200 OK response.

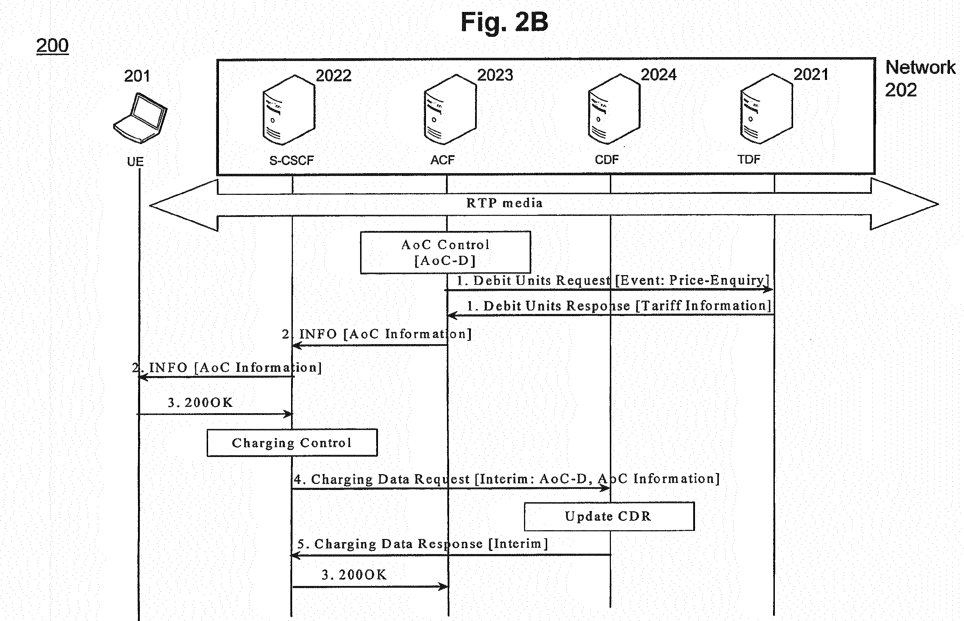

As shown in Fig. 2B, the following sequence may be performed:
1. The AoC Function 2023 detects that tariff is changed and queries the TDF 2021 for Tariff Information.
2. SIP INFO request is send with AoC-D information.
3. SIP 2000K is received.
4. The S-CSCF 2022 sends a Charging Data Request with AoC service type and AoC Information indicating START_RECORD to the CDF 2024.
5. The CDF 2024 acknowledges the reception of the Charging Data Response and updates the CDR of the S-CSCF 2022.

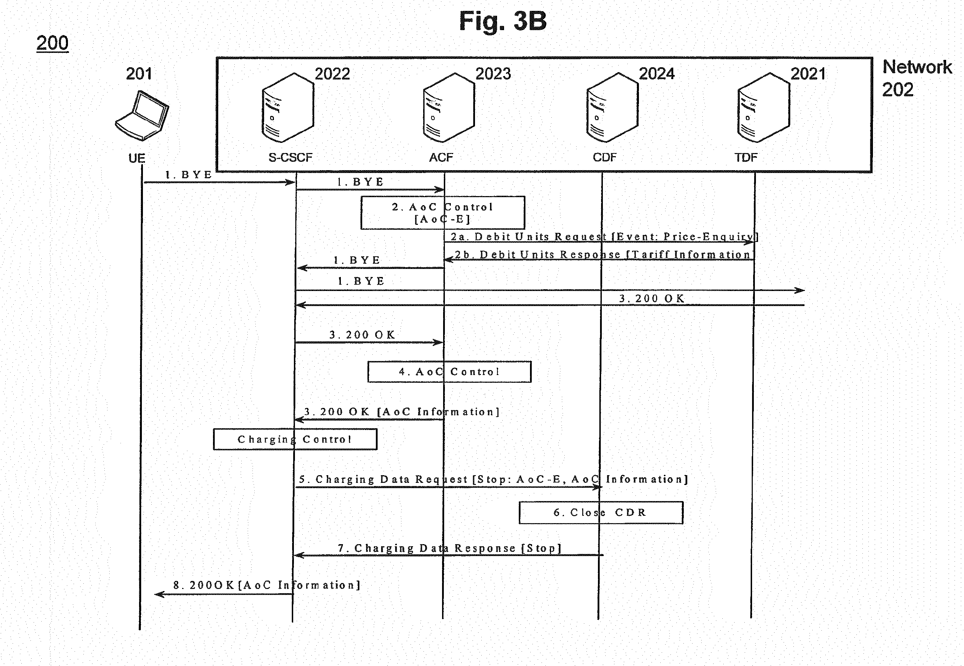

As shown in Fig. 3B, the following sequence may be performed:
1. A SIP session is released by sending a SIP BYE message. The S-CSCF 2022 forwards this message to the ACF 2023 and forwards this request.
2. The AoC Function 2023 received the AoC Type = [AoC-E] and queries the TDF 2021 for Tariff Information.
3. The S-CSCF 2022 receives the 200 OK response and forwards this response.
4. The AoC Function 2023 maps the Tariff Information into the AoC Information for further proceeding.
5. The S-CSCF 2022 sends a Charging Data Request with AoC service type and AoC Information indicating STOP_RECORD to the CDF 2024.
6. The CDF 2024 closes the CRD of the S-CSCF 2022 to record the AoC service type and AoC Information.
7. The CDF 2024 acknowledges the reception of the Charging Data Response.
8. The AoC-S information is inserted in the SIP 200 OK response.

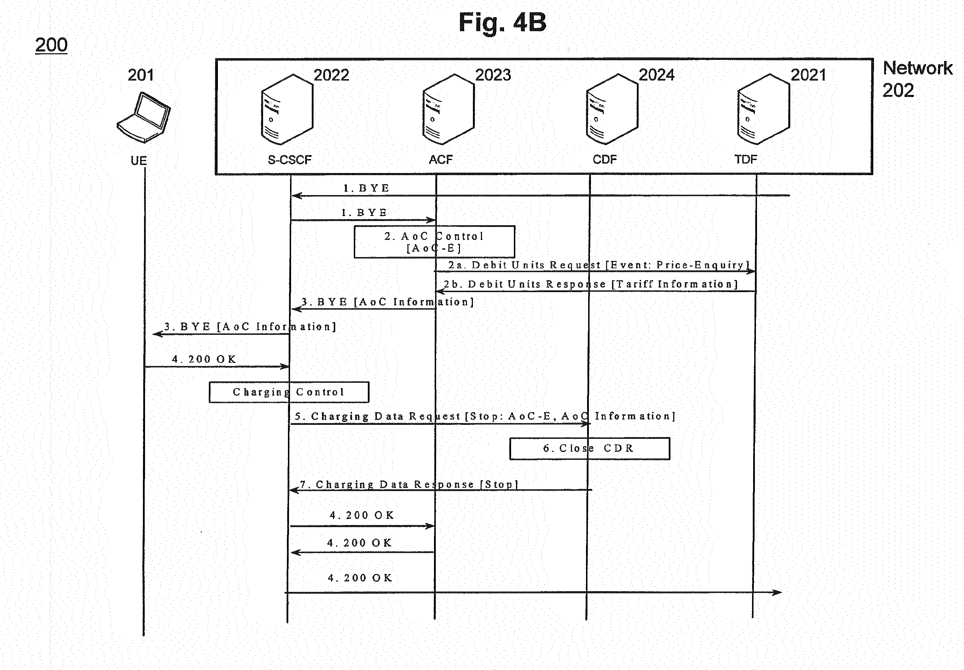

As shown in Fig. 4B, the following sequence may be performed:
1. A SIP session is released by sending a SIP BYE message. The S-CSCF 2022 forwards this message to the AoC Function 2023.
2. The AoC Function 2023 queries the TDF 2021 and converts the Tariff Information to AoC Information for AoC-E.
4. Upon receiving the BYE message, the AoC Function 2023 forwards the SIP BYE request to the UE 201. AoC information is included.
4. The final answer to the BYE message is forwarded.
5. The S-CSCF 2022 sends a Charging Data Request with AoC service type and AoC Information indicating STOP_RECORD to the CDF 2024.
6. The CDF 2024 closes the CDR of the S-CSCF 2022 to record the AoC service type and AoC Information.
7. The CDF 2024 acknowledges the reception of the Charging Data Response.

Furthermore, the call charge information may comprise cost, rate and/or tariff. Moreover, the answer message may be constituted by a credit control event answer, and the request message may be constituted by a credit control event request. Further, the first information may be related to an application type, and the first information may constituted by an authentication application identifier. In the latter case, the authentication application identifier may be 5. Still further, the second information may be related to a request type, and the second information may be constituted by a content of communication request type. In the latter case, the content of communication request type may be an event request. Still further, the third information may be related to a requested action, and the third information may be constituted by a requested action attribute value pair. In the latter case, the requested action attribute value pair may be a price enquiry. In addition, the fourth information may be related to service information, and the fourth information may be constituted by a service information attribute value pair. In the latter case, the service information attribute value pair may provide information of the requested service being an internet protocol multimedia subsystem service.

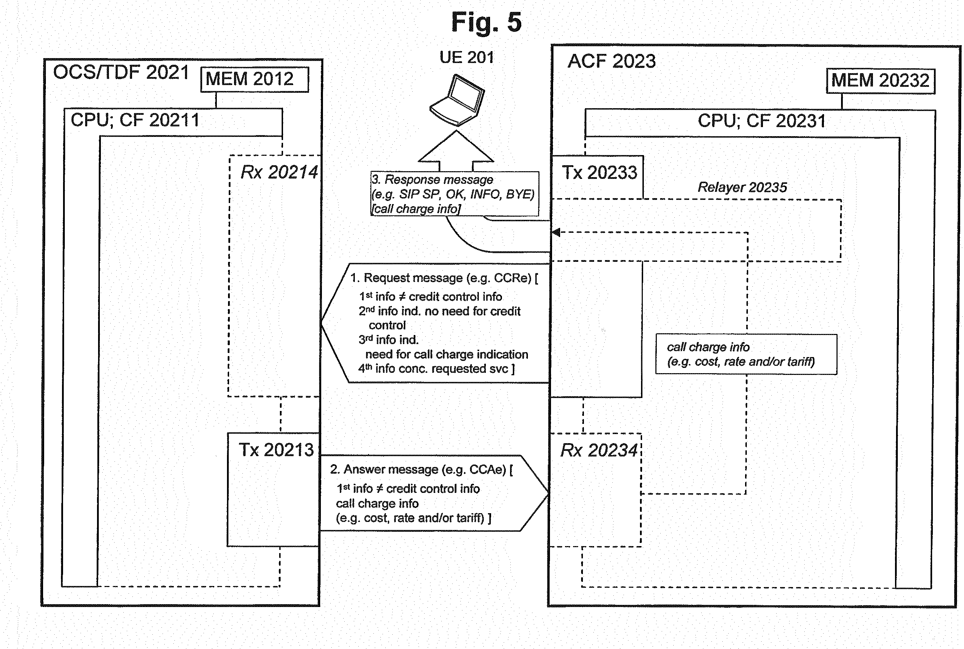

Fig. 5 shows apparatuses (e.g. OCS/TDF 2021, referred to only as "OCS" hereinafter, and ACF 2023) for call charge indication according to an example of the present invention. Within Fig. 5, for ease of description, means or portions which may provide main functionalities are depicted with solid functional blocks or arrows and a normal font, while means or portions which may provide optional functions are depicted with dashed functional blocks or arrows and an italic font.

The OCS 2021 may comprise a CPU (or core functionality CF) 20211, a memory 20212, a transmitter (or means for transmitting) 20213 and an optional receiver (or means for receiving) 20214.

The ACF 2023 may comprise a CPU (or core functionality CF) 20231, a memory 20232, a transmitter (or means for transmitting) 20233, an optional receiver (or means for receiving) 20234 and an optional relayer (or means for relaying) 20235.

As indicated by the dashed extension of the functional blocks of the CPUs 20211; 20231, the means for transmitting 20213 and the means for receiving 20214 of the OCS 20221 as well as the means for transmitting 20233, the means for receiving 20234 and the means for relaying 20235 of the UE 201 may be functionalities running on the CPUs 20211; 20231 of the OCS 2021 or the ACF 20223, respectively, or may alternatively be separate functional entities or means. Furthermore, as indicated by the functional blocks of the means for relaying 20235 and the means for transmitting 20233 partly overlapping each other, the means for relaying 20235 may also be a functionality or a subunit of the means for transmitting 20233.

The CPUs 20x1 (wherein x = 21 and 23) may respectively be configured to process various data inputs and to control the functions of the memories 20x2, the means for transmitting 202x3 and the means for receiving 20x4 (and the means for relaying 20235 of the ACF 2023). The memories 20x2 may serve e.g. for storing code means for carrying out e.g. the methods according to the example of the present invention, when run e.g. on the CPUs 20x1. It is to be noted that the means for transmitting 20x3 and the means for receiving 20x4 may alternatively be provided as respective integral transceivers. It is further to be noted that the transmitters/receivers may be implemented i) as physical transmitters/receivers for transceiving e.g. via the air interface (e.g. in case of transmitting between the UE 201 and the ACF 2023), ii) as routing entities e.g. for transmitting/receiving data packets e.g. in a PS (packet switched) network (e.g. between the OCS 2021 and the ACF 2023 when disposed as separate network entities), iii) as functionalities for writing/reading information into/from a given memory area (e.g. in case of the OCS 2021 and the ACF 20233 when disposed as an integral network entity (not shown)), or iv) as any suitable combination of i) to iii) .

E.g. the means for transmitting 20233 of the ACF 2023 may perform transmitting a request message (e.g. CCRe) comprising first information (e.g. Auth-Application-ID = 5) being different from credit control information (e.g. Auth-Application-ID ≠ 4), second information (e.g. CC-Request-Type) indicating absence of a need for credit control (e.g. EVENT_REQUEST), third information (e.g. Requested-Action AVP) indicating a need for call charge indication (e.g. PRICE_ENQUIRY), and fourth information (e.g. Service-Information AVP) concerning a service requested (e.g. IMS service). For example, the optional means for receiving 20214 of the OCS 2021 may perform receiving the request message.

Then, e.g. the means for transmitting 20213 of the OCS 2021 may perform transmitting an answer message (e.g. CCAe) comprising call charge information (e.g. Tariff Info) responsive to reception, by the optional means for receiving 20214, of the request message comprising the above-described first to fourth information.

Then, e.g. the means for relaying 20235 of the ACF 2023 may perform relaying, responsive to reception of the answer message comprising call charge information, the AoC information in a response message.

As for further refinements of the apparatuses according to an example of the present invention, the response message may be a session initiation protocol session progress response (see Fig. 1, step S1-4, Aoc-S after IMS registration but prior to session establishment), a session initiation protocol OK response (see Fig. 1, step S2-4, AoC-S after session establishment), a session initiation protocol information message (see Fig. 2, step S3-4, AoC-D after session establishment), a session initiation protocol OK response answering another session initiation protocol bye message (see Fig. 3, step S4-4 AoC-E e.g. shortly before call termination (not shown)) and a session initiation protocol bye message (see Fig. 4, step S5-4, Aoc-E e.g. shortly before call termination (not shown)).

Furthermore, the call charge information may comprise cost, rate and/or tariff. Moreover, the answer message may be constituted by a credit control event answer, and the request message may be constituted by a credit control event request. Further, the first information may be related to an application type, and the first information may constituted by an authentication application identifier. In the latter case, the authentication application identifier may be 5. Still further, the second information may be related to a request type, and the second information may be constituted by a content of communication request type. In the latter case, the content of communication request type may be an event request. Still further, the third information may be related to a requested action, and the third information may be constituted by a requested action attribute value pair. In the latter case, the requested action attribute value pair may be a price enquiry. In addition, the fourth information may be related to service information, and the fourth information may be constituted by a service information attribute value pair. In the latter case, the service information attribute value pair may provide information of the requested service being an internet protocol multimedia subsystem service.

Furthermore, at least one of, or more of means for transmitting 20233; 20213, means for receiving 20234; 20214, means for relaying 20235 and/or the OCS 2021 and/or the ACF 2023, or the respective functionalities carried out, may be implemented as a chipset or module.

The present invention also relates to a system which may comprise the above-describe OCS 2021 and the above-described ACF 2023.

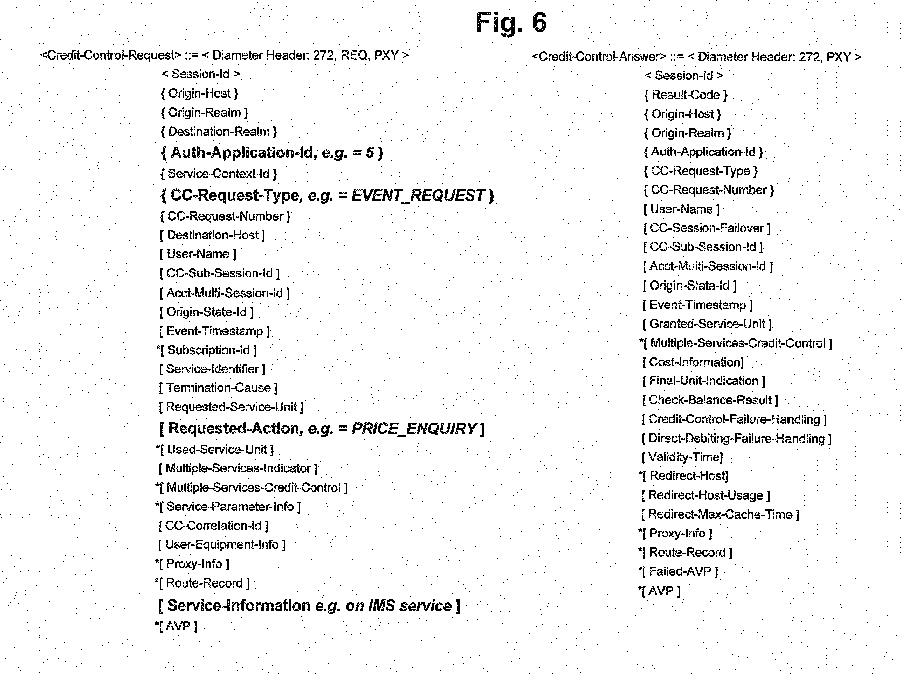

Fig. 6 shows a data structure (e.g. CCRe) for call charge indication according to an example of the present invention.

As shown in Fig. 6, the data structure (e.g. CCRe) may comprise (as indicated by the enlarged and bold-printed information elements) first information (e.g. auth-application-ID = 5) being different from credit control information (i.e. auth-application-ID ≠ 4), second information (e.g. CC-Request-Type) indicating absence of a need for credit control (e.g. EVENT_REQUEST), third information (e.g. requested-action AVP) indicating a need for call charge indication (e.g. PRICE_ENQUIRY) and fourth information (e.g. Service-Information AVP) concerning a service requested (e.g. IMS service).

As for further refinements of the data structure according to an example of the present invention, the data structure may be constituted by a credit control event request. In addition, the first information may be constituted by an authentication application identifier being 5. Further, the second information may be constituted by a content of communication request type being an event request. Still further, the third information may be constituted by a requested action attribute value pair being a price enquiry. Moreover, the fourth information may be constituted by a service information attribute value pair e.g. providing information of the requested service being an internet protocol multimedia subsystem service.

Without being restricted to the details following in this section, the embodiment of the present invention may be summarized as follows:
Requiring tariff-, rate- and/or cost-information for AoC from e.g. the Online Charging System the CCRe may be used. The CCRe is defined in the IETF RFC 4006 for credit control purposes and may have the following form.

```
    <Credit-Control-Request> ::= < Diameter Header: 272, REQ, PXY >
                          < Session-Id >
                          { Origin-Host }
                          { Origin-Realm }
                          { Destination-Realm }
                          { Auth-Application-Id }
                          { Service-Context-Id }
                          { CC-Request-Type }
                          { CC-Request-Number }
                          [ Destination-Host ]
                          [ User-Name ]
                          [ CC-Sub-Session-Id ]
                          [ Acct-Multi-Session-Id ]
                          [ Origin-State-Id ]
                          [ Event-Timestamp ]
                         *[ Subscription-Id ]
                          [ Service-Identifier ]
                          [ Termination-Cause ]
                          [ Requested-Service-Unit ]
                          [ Requested-Action ]
                         *[ Used-Service-Unit ]
                          [ Multiple-Services-Indicator ]
                         *[ Multiple-Services-Credit-Control ]
                         *[ Service-Parameter-Info ]
                          [ CC-Correlation-Id ]
                          [ User-Equipment-Info ]
                         *[ Proxy-Info ]
                         *[ Route-Record ]
                          [ Service-Information ]
                         * [ AVP ]
```

```
    <Credit-Control-Answer> ::= < Diameter Header: 272, PXY >
                         < Session-Id >
                         { Result-Code }
                         { Origin-Host }
                         { Origin-Realm }
                         { Auth-Application-Id }
                         { CC-Request-Type }
                         { CC-Request-Number }
                         [ User-Name ]
                         [ CC-Session-Failover ]
                         [ CC-Sub-Session-Id ]
                         [ Acct-Multi-Session-Id ]
                         [ Origin-State-Id ]
                         [ Event-Timestamp ]
                         [ Granted-Service-Unit ]
                        *[ Multiple-Services-Credit-Control ]
                         [ Cost-Information]
                          [ Final-Unit-Indication ]
                          [ Check-Balance-Result ]
                          [ Credit-Control-Failure-Handling ]
                          [ Direct-Debiting-Failure-Handling ]
                          [ Validity-Time]
                        *[ Redirect-Host]
                          [ Redirect-Host-Usage ]
                          [ Redirect-Max-Cache-Time ]
                        *[ Proxy-Info ]
                        *[ Route-Record ]
                        *[ Failed-AVP ]
                          [ Service-Information ]
                         *[ AVP ]
```

For the separation from credit control, the CCRe for AoC may include e.g. a currently not registered internet assigned numbers authority (IANA) diameter application ID, e.g. 5 (such as diameter AoC application).

For requesting the cost-, rate or tariff-Information e.g. from the OCS the CCRe may be filled in the following way:
- E.g. the Auth-Application-Id may be set to e.g. the value 5, indicating the diameter AoC application.
- E.g. the CC-Request-Type may be set to the value EVENT_REQUEST in the request message.
- E.g. the Requested-Action AVP may be set to PRICE_ENQUIRY in the request message.
- E.g. the Service-Information AVP (as defined by the 3GPP TS 32.299) may be included in the request message providing information about the requested IMS service.

The OCS for example may provide the cost-, rate or tariff-Information to e.g. the AoC Function (ACF) in the credit control answer message and based on the Service information and other information that it received in the price enquiry request.

The ACF may use the information provided e.g. from the OCS to provide the AoC Information e.g. to the IMS user e.g. via the XML encoded AoC-Information included e.g. in the multipurpose internet mail extension (MIME) body of the following SIP messages:
- SIP 200 OK response (AoC-S)
- SIP 183 Session Progress (SP) response (AoC-S)
- SIP INFO (AoC-D)
- SIP BYE (AoC-E) or
- SIP 200 OK answering SIP BYE (AoC-E).

### [Further examples]

For the purpose of the present invention as described herein above, it should be noted that
- an access technology may be any technology by means of which a user equipment can access an access network (or base station, respectively). Any present or future technology, such as WiMAX (Worldwide Interoperability for Microwave Access) or WLAN (Wireless Local Access Network), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed line;
- a charging data function (CDF) may be any functionality which receives charging events from the Charging Trigger Function (CTF) via the Rf reference point. It then uses the information contained in the charging events to construct CDRs. This procedure may be described by the following conditions:
   ■ CDRs may be constructed from single charging events, i.e. a 1:1 relation between event and CDR.
   ■ CDRs may be constructed from a set of several charging events, i.e. a n:1 relation between event and CDR.
   ■ Each charging event is used for exactly one CDR, i.e. a 1:n relation between event and CDR (with n>1) is not possible.
   ■ Multiple charging events that are used to create a single CDR may not necessarily be of the same type.
   ■ There is no requirement or assumption of any synchronization between the reception of the charging event(s) and the creation of the resulting CDR. However, the CDF shall be capable of receiving and processing charging events and generating the resulting CDR in near real-time.
   ■ The relationship between CDF and CTF may be 1:1 (integrated CDF) or 1:n (separated CDF) (refer to clause 4.5 for possible physical configurations of the logical charging functions). This includes the possibility of network element (NEs) of different types feeding charging events into the same CDF.
   ■ All charging events used to build a CDR must originate from the same NE, i.e. there is no cross-NE or cross-NE-type correlation of charging events in the CDF.

The results of the CDF tasks are charging data records (CDRs) with a well-defined content and format. The content and format of these CDRs are specified per domain / subsystem / service in the related middle tier charging specification;
- a tariff determination function (TDF) may be any functionality which is responsible for the determination of the Tariff Information for the used service. The Tariff Information is provided e.g. by the OCS, optionally preconfigured Tariff Information could be used. (The TDF may determine the tariff as CDP but may not insert it to SIP);
- a tariff determination point (TDP) is any network element that may determine which tariff/add-on charge should be applied, and inserts the tariff information e.g. to the appropriate SIP requests or responses. The remote TDP may be implemented in an SIP Application Server located in the Home Network, Visited Network or in another network, including a CS-based network where the MGCF acts as the remote TDP vis-à-vis the AoC function;
- a network may be any device, unit or means by which a station entity or other user equipment may connect to and/or utilize services offered by the access network; such services include, among others, data and/or (audio-) visual communication, data download etc.;
- generally, the present invention may be applicable in those network/user equipment environments relying on a data packet based transmission scheme according to which data are transmitted in data packets and which are, for example, based on the Internet Protocol IP. The present invention is, however, not limited thereto, and any other present or future IP or mobile IP (MIP) version, or, more generally, a protocol following similar principles as (M)IPv4/6, is also applicable;
- a user equipment may be any device, unit or means by which a system user may experience services from an access network;
- method steps likely to be implemented as software code portions and being run using a processor at a network element or terminal (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, units or means likely to be implemented as hardware components at the OCS and/or ACF, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may alternatively be based on any security architecture capable e.g. of authentication, authorization, keying and/or traffic protection;
- devices, units or means (e.g. OCS and/or ACF, or any one of their respective means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

Although the present invention has been described herein before with reference to particular embodiments thereof, the present invention is not limited thereto and various modification can be made thereto within the scope of the c claims.

For ease of clarity, the following table provides a survey of the abbreviations used in the above description. It is to be noted that an "s" following an abbreviation represents the plural of that abbreviation, specification
- UE: User equipment
- CS: Circuit switched
- PS: Packet switched
- UL: Uplink
- DL: Downlink
- AoC: Advice of Charge
- ACF: AoC Function
- AoC-D: AoC - During
- AoC-E: Aoc - End
- AoC-S: AoC - Start
- CDF: Charging data function
- TDF: Tariff determination function
- CDR: Charging data record
- AVP: Attribute Value Pair
- CCA: Credit Control Answer
- CCAe: Credit Control Event Answer
- CCR: Credit Control Request
- CCRe: Credit Control Event Request
- OCS: Online Charging Server
- SIP: Session initiation protocol
- IP: Internet protocol
- IMS: IP multimedia subsystem
- IANA: Internet assigned numbers authority
- MIME: Multipurpose internet mail extension
- PSTN: Public switched telephone network

## Claims

1. A method (2023) performed by an advice of charge function (2023) of providing advice of charge service in an internet protocol multimedia subsystem (2024), IMS, comprising:
receiving a request for setting up a session for a user;
receiving an advice of charge type from a home subscriber server (2025);
determining that the advice of charge type comprises an indication indicating that advice of charge information is to be provided to the user during setting up the session;
querying an Online Charging System (2021) for tariff information, wherein the querying for tariff information comprises sending a credit control event request message with a requested-action attribute-value pair set to PRICE_ENQUIRY,
receiving the tariff information from the Online Charging System (2021) in a credit control answer message;
and including advice of charge information in a response to the request.

2. A method according to claim 1, further comprising mapping the tariff information into the advice of charge information.

3. A method according to any preceding claim, further comprising detecting a tariff change, and querying the Online Charging System (2021) for tariff information.

4. A method according to any preceding claim, further comprising querying the home subscriber server (2025) for the advice of charge type.

5. An apparatus for providing advice of charge service in an internet protocol multimedia subsystem, IMS, (2024) comprising:
means for receiving (2023) a request for setting up a session for a user;
means for receiving an advice of charge type from a home subscriber server (2025);
means for determining that the advice of charge type comprises an indication indicating that advice of charge information is to be provided to the user during setting up the session;
means for querying an Online Charging System (2021) for tariff information, wherein the querying for tariff information comprises sending a credit control event request message with a requested-action attribute-value pair set to PRICE_ENQUIRY,
means for receiving the tariff information from the Online Charging System (2021) in a credit control answer message, and
means for including advice of charge information in a response to the request.

6. An apparatus according to claim 5, further comprising means for mapping the tariff information into the advice of charge information.

7. An apparatus according to claim 5 or claim 6, further comprising means for detecting a tariff change, and querying the Online Charging System (2021) for tariff information.

8. An apparatus according to any of claims 5 to 7, further comprising means for querying a home subscriber server, HSS, (2025) for the advice of charge type.

9. A computer program product comprising instructions which, when executed on a processor of an advice of charge function, cause the processor to carry out the steps of the method of any of claims 1 to 4.

## Patentansprüche

1. Verfahren (2023), das von einer Gebührenbenachrichtungsfunktion (2023) zur Bereitstellung eines Gebührenbenachrichtigungsdienstes in einem Internetprotokoll-Multimedia-Subsystem (2024), IMS, durchgeführt wird, umfassend:
Empfangen einer Anforderung zum Aufbau einer Sitzung für einen Benutzer;
Empfangen eines Gebührenbenachrichtigungstyps von einem Home Subscriber Server (2025);
Bestimmen, dass der Gebührenbenachrichtigungstyp eine Angabe umfasst, die angibt, dass dem Benutzer während des Aufbaus der Sitzung Gebührenbenachrichtigungsinformationen zur Verfügung gestellt werden sollen;
Abfragen eines Online-Abbuchungssystems (2021) nach Tarifinformationen, wobei das Abfragen von Tarifinformationen das Senden einer Guthabensteuerungsereignis-Anforderungsnachricht mit einem Angeforderte-Aktion Attribut-Wert-Paar umfasst, das auf PREISANFRAGE gesetzt ist,
Empfangen der Tarifinformationen vom Online-Abbuchungssystem (2021) in einer Guthabensteuerungsantwortnachricht;
und Aufnehmen der Gebührenbenachrichtigungsinformationen in eine Antwort auf die Anfrage.

2. Verfahren nach Anspruch 1, ferner umfassend das Abbilden der Tarifinformationen auf die Gebührenbenachrichtigungsinformationen.

3. Verfahren nach einem der vorstehenden Ansprüche, ferner umfassend das Erkennen einer Tarifänderung und das Abfragen des Online-Abbuchungssystems (2021) nach Tarifinformationen.

4. Verfahren nach einem der vorstehenden Ansprüche, ferner umfassend das Abfragen des Home Subscriber Servers (2025) nach dem Gebührungsbenachrichtigungstyp.

5. Vorrichtung zur Bereitstellung von Gebührenbenachrichtigungsdienst in einem Internetprotokoll-Multimedia-Subsystem, IMS, (2024) umfassend:
Mittel zum Empfangen (2023) einer Anforderung zum Aufbau einer Sitzung für einen Benutzer;
Mittel zum Empfangen eines Gebührenbenachrichtigungstyps von einem Home Subscriber Server (2025);
Mittel zum Bestimmen, dass der Gebührenbenachrichtigungstyp eine Angabe umfasst, die angibt, dass dem Benutzer während des Aufbaus der Sitzung Gebührenbenachrichtigungsinformationen zur Verfügung gestellt werden sollen;
Mittel zum Abfragen eines Online-Abbuchungssystems (2021) nach Tarifinformationen, wobei das Abfragen von Tarifinformationen das Senden einer Guthabensteuerungsereignis-Anforderungsnachricht mit einem Angeforderte-Aktion Attribut-Wert-Paar umfasst, das auf PREISANFRAGE gesetzt ist,
Mittel zum Empfangen der Tarifinformationen vom Online-Abbuchungssystem (2021) in einer Guthabensteuerungsantwortnachricht, und
Mittel zum Aufnehmen der Gebührenbenachrichtigungsinformationen in eine Antwort auf die Anfrage.

6. Vorrichtung nach Anspruch 5, ferner umfassend Mittel zum Abbilden der Tarifinformationen auf die Gebührenbenachrichtigungsinformationen.

7. Vorrichtung nach Anspruch 5 oder Anspruch 6, ferner umfassend das Erkennen einer Tarifänderung und das Abfragen des Online-Abbuchungssystems (2021) nach Tarifinformationen.

8. Vorrichtung nach einem der Ansprüche 5 bis 7, ferner umfassend Mittel zum Abfragen eines Home Subscriber Servers, HSS,(2025) nach dem Gebührungsbenachrichtigungstyp.

9. Computerprogrammprodukt, das Anweisungen umfasst, die, wenn sie auf einem Prozessor einer Gebührenbenachrichtigungsfunktion ausgeführt werden, den Prozessor veranlassen, die Schritte des Verfahrens nach einem der Ansprüche 1 bis 4 durchzuführen.

## Revendications

1. Procédé (2023) exécuté par une fonction d'avis de taxation (2023) permettant de fournir un service d'avis de taxation dans un sous-système multimédia de protocole Internet (2024), IMS, comprenant :
la réception d'une demande pour établir une session pour un utilisateur ;
la réception d'un type d'avis de taxation en provenance d'un serveur d'abonné résidentiel (2025) ;
la détermination que le type d'avis de taxation comprend une indication indiquant qu'une information d'avis de taxation doit être fournie à l'utilisateur pendant l'établissement de la session ;
l'interrogation d'un système de taxation en ligne (2021) pour une information de tarif, dans lequel l'interrogation pour une information de tarif comprend l'envoi d'un message de demande d'événement de contrôle du crédit avec une paire attribut-valeur d'action demandée réglée sur PRICE_ENQUIRY,
la réception de l'information de tarif en provenance du système de taxation en ligne (2021) dans un message de réponse de contrôle du crédit ;
et l'inclusion d'une information d'avis de taxation dans une réponse à la demande.

2. Procédé selon la revendication 1, comprenant en outre le mappage de l'information de tarif dans l'information d'avis de taxation.

3. Procédé selon une quelconque revendication précédente, comprenant en outre la détection d'un changement de tarif, et l'interrogation du système de taxation en ligne (2021) pour une information de tarif.

4. Procédé selon une quelconque revendication précédente, comprenant en outre l'interrogation du serveur d'abonné résidentiel (2025) pour le type d'avis de taxation.

5. Appareil pour fournir un service d'avis de taxation dans un sous-système multimédia de protocole Internet, IMS, (2024) comprenant :
des moyens pour recevoir (2023) une demande pour établir une session pour un utilisateur ;
des moyens pour recevoir un type d'avis de taxation en provenance d'un serveur d'abonné résidentiel (2025) ;
des moyens pour déterminer que le type d'avis de taxation comprend une indication indiquant qu'une information d'avis de taxation doit être fournie à l'utilisateur pendant l'établissement de la session ;
des moyens pour interroger un système de taxation en ligne (2021) pour une information de tarif, dans lequel l'interrogation pour une information de tarif comprend l'envoi d'un message de demande d'événement de contrôle du crédit avec une paire attribut-valeur d'action demandée réglée sur PRICE_ENQUIRY,
des moyens pour recevoir l'information de tarif en provenance du système de taxation en ligne (2021) dans un message de réponse de contrôle du crédit, et
des moyens pour inclure une information d'avis de taxation dans une réponse à la demande.

6. Appareil selon la revendication 5, comprenant en outre des moyens pour mapper l'information de tarif dans l'information d'avis de taxation.

7. Appareil selon la revendication 5 ou la revendication 6, comprenant en outre des moyens pour détecter un changement de tarif, et interroger le système de taxation en ligne (2021) pour une information de tarif.

8. Appareil selon l'une quelconque des revendications 5 à 7, comprenant en outre des moyens pour interroger un serveur d'abonné résidentiel (2025) pour le type d'avis de taxation.

9. Progiciel informatique comprenant des instructions qui, lorsqu'elles sont exécutées sur un processeur d'une fonction d'avis de taxation, amènent le processeur à effectuer les étapes du procédé de l'une quelconque des revendications 1 à 4.
